# EUROPEAN PATENT SPECIFICATION

(11) **EP 2 972 065 B1**
(45) Date of publication and mention of the grant of the patent: **16.02.2022**
(21) Application number: 14772613.7
(22) Date of filing: 31.03.2014
(51) Int. Cl.: G01Q 20/02, G01Q 10/04, G01B 11/30

(54) **OPTICAL BEAM POSITIONING UNIT FOR ATOMIC FORCE MICROSCOPE**
EINHEIT ZUR POSITIONIERUNG OPTISCHER STRAHLEN FÜR EIN ATOMKRAFTMIKROSKOP
UNITÉ DE POSITIONNEMENT DE FAISCEAU OPTIQUE POUR UN MICROSCOPE À FORCE ATOMIQUE

(30) Priority: 14.03.2013 US 201361852231 P; 06.08.2013 US 201361958849 P; 12.03.2014 US 201414000001
(43) Date of publication of application: 20.01.2016
(73) Proprietor: Oxford Instruments Asylum Research, Inc., Santa Barbara CA 93117 (US)
(72) Inventor: The designation of the inventor has not yet been filed
(74) Representative: Gill Jennings & Every LLP
(86) International application number: PCT/US2014/000069
(87) International publication number: WO 2014/158290

(56) References cited:
- WO-A1-2009/066555
- JP-A- 2001 304 833
- US-A- 5 144 150
- US-A1- 2007 195 333
- US-A1- 2008 198 448
- US-A1- 2008 223 117
- NISHIDA SHUHEI ET AL: "Photothermal excitation of a single-crystalline silicon cantilever for higher vibration modes in liquid", JOURNAL OF VACUUM SCIENCE AND TECHNOLOGY: PART B, AVS / AIP, MELVILLE, NEW YORK, NY, US, vol. 27, no. 2, 1 April 2009 (2009-04-01), pages 964-968, XP012129225, ISSN: 1071-1023, DOI: 10.1116/1.3077487

## Description

### REFERENCES CITED

### US PATENTS

4724318
5,047,633
5,412,980
5512745

5144833
4747698
7497613
5441343
6696370
8443459
5003815
5825020
6330824
7497613
8370960
8443459
8458810

### US PATENT APPLICATIONS

20130074920
20120096602
20110251059

### OTHER PUBLICATIONS

Binnig G, Quate CF, Gerber C. Atomic force microscope. Phys. Rev. Lett. 1986; 56:930.
R. Garcia, Amplitude Modulation Atomic Force Microscopy (Wiley-VCH, Weinheim, 2010).
P. Gleyzes, P. K. Kuo, and A. C. Boccara, "BISTABLE BEHAVIOR OF A VIBRATING TIP NEAR A SOLID-SURFACE," Applied Physics Letters 58 (25), 2989-2991 (1991)
Q. Zhong, D. Inniss, K. Kjoller, and V. B. Elings, Surf. Sci. Lett. 290, L688 (1993).
D.A. Chernoff, edited by G.W. Bailey et al. (Jones and Begell, New York, 1995), pp. 888-889.
P. Achalla, J. McCormick, T. Hodge et al., "Characterization of elastomeric blends by atomic force microscopy," Journal of Polymer Science: Part B 44, 492-503 (2005);
J.B. Pethica and W.C. Oliver, "Tip surface interactions in STM and AFM," Physica Scripta T19A, 61-66 (1987).
R. Garcia, J. Tamayo, and A. San Paulo, "Phase contrast and surface energy hysteresis in tapping mode scanning force microscopy," Surface and Interface Analysis 27 (5-6), 312-316 (1999).
Yagun Zhao, Qian Cheng, Menglu Qian et al., "Phase image contrast mechanism in intermittent contact atomic force microscopy," Journal of Applied Physics 108, 094311 (2010)
Wensheng Xu, Paula M. Wood-Adams, and Christopher G. Robertson, "Measuring local viscoelastic properties of complex materials with tapping mode atomic force microscopy," Polymer 47, 4798 (2006).
F. Dubourg, JP Aime, S Maursaudon et al., "Probing viscosity of a polymer melt at the nanometer scale with an oscillating nanotip," Eur Phys J E6, 49-55 (2001).
G.J.C. Braithwaite and P.F. Luckham, "The simultaneous determination of the forces and viscoelastic properties of adsorbed polymer layerse," Journal of Colloid and Interface Sciece 218, 917 (1999).
A. Noy, C.H. Sanders, D.V. Vezenov et al., "Chemically sensitive imaging in tapping mode by chemical force microscopy: Relationship bewteen phase lag and adhesion," Langmuir 14 (7), 1508-1511 (1998).
R. Garcia N.F. Martinez, "Measuring phase shifts and energy dissipation with amplitude modulation AFM," Nanotechnology 17, S167-172 (2006).
J.P. Cleveland, B. Anczykowski, A.E. Schmid et al., "Energy dissipation in tapping mode atomic force microscopy," Applied Physics Letters 72, 2613-2615 (1998).
Carlos J. Gomez and Ricardo Garcia, "Determination and simulation of nanoscale energy dissipation processes in ampltiude modulation AFM," Ultramicroscopy, 626-633 (2010).
A. San Paulo and R. Garcia, "Unifying theory of tappingmode atomic-force microscopy," Physical Review B [Condensed Matter and Materials Physics] 66 (4), 041406/041401-041404 (2002).
Noncontact Atomic Force Microscopy, edited by S. Morita, R. Wiesendanger, and E. Meyer, Springer, Berlin, (2002).
F. J. Giessibl, Rev. Mod. Phys. 75, 949 (2003).
R. Garcia and R. Perez, Surf. Sci. Rep. 47, 197 (2002).
Y. Sugimoto, M. Abe, S. Hirayama, N. Oyabu, O. Custance, and S. Morita, Nat. Mater. 4, 156 (2005).
M. A. Lantz, H. J. Hug, R. Hoffman, P. J. A. van Schendel, P. Kappenberger, S. Martin, A. Baratoff, and H. J. Guntherodt, Science 291,2580 (2001).
N. Oyabu, P. Pou, Y. Sugimoto, P. Jelinek, M. Abe, S. Morita, R. Perez, and O. Custance, Phys. Rev. Lett. 96, 106101 (2006).
Y. Sugimoto, P. Pou, O. Custance, P. Jelinek, S. Morita, R. Perez, and M. Abe, Phys. Rev. B 73, 205329 (2005).
Y. Sugimoto, P. Jelinek, P. Pou, M. Abe, S. Morita, R. Perez, and O.Custance, Phys. Rev. Lett. 98, 106104 (2007).
Y. Sugimoto, P. Pou, M. Abe, P. Jelinek, R. Perez, S. Morita, and O. Custance, Nature(London) 446, 64 (2007).
J. I. Kilpatrick, A. Gannepalli, J. P. Cleveland and S. P. Jarvis, Rev. Sci. Inst., 80, 023701 (2009).
A. Gannepalli, A. Sebastian, J. Cleveland, and M. Salapaka, Appl. Phys. Lett. 87, 111901 (2005).
R. Proksch and E.D. Dahlberg, Rev. Sci. Instr. 64, 912 (1993).
M. Stark, R. Guckenberger, A. Stemmer, and R.W. Stark, J. Appl. Phys. 98, 114904 (2005).
R. Proksch, Appl. Phys. Lett. 89, 113121 (2006).
B.J. Rodriguez, C. Callahan, S.V. Kalinin, and R. Proksch, Nanotechnology 18, 475504 (2007).
M. Baumann and R.W. Stark, Ultramicroscopy 110, 578-581 (2010).
G. Chawla and S. D Solares, Meas. Sci. Technol. 20, 015501 (2009).
M. Stark, R.W. Stark, W.M. Heckl, and R. Guckenberger, Proc. Natl. Acad. Sci. USA 99, 8473-8478 (2002).
T.R. Rodriguez and R. Garcia, Appl. Phys. Lett. 84, 449 (2004).
J.W. Li, J.P. Cleveland, and R. Proksch, Appl. Phys. Lett. 94, 163118 (2009).
J.R. Lozano and R. Garcia, Phys. Rev. Lett. 100, 076102 (2008).
R.W. Stark, Appl. Phys. Lett. 94, 063109 (2009).
D. Platz, E. A. Tholén, D. Pesen, and D. B. Haviland, Appl. Phys. Lett. 92, 153106 (2008).
A.B. Kos and D.C. Hurley, Meas. Sci. Technol. 19, 015504 (2008)
R. Nath, Y.H. Chu, N.A. Polomoff, R. Ramesh, and B.D. Huey, Appl. Phys. Lett. 93, 072905 (2008).
S. Jesse, S.V. Kalinin, R. Proksch, A.P. Baddorf, and B.J. Rodriguez, Nanotechnology 18, 435503 (2007).
S. Jesse and S.V. Kalinin, Nanotechnology 20, 085714 (2009).
S. Jesse, B. Mirman, and S.V. Kalinin, Appl. Phys. Lett. 89, 022906 (2006).
R. Proksch and D. Yablon, Appl. Phys. Lett., 100, 073106 (2012).
M. Stark, R. W. Stark, W. M. Heckl, and R. Guckenberger, Proc. Natl. Acad. Sci. USA 99, 8473 (2002).
T. R. Rodriguez and R. Garcia, Appl. Phys. Lett. 84, 449 (2004).
R. Proksch, Appl. Phys. Lett. 89, 113 121 (2006).
N. F. Martinez, S. Patil, J. R. Lozano, and R. Garcia, Appl. Phys. Lett. 89, 153 115 (2006).
O. Sahin, S. Magonov, C. Su, C. F. Quate, and O. Solgaard, Nature Nanotech. 2, 507 (2007).
D. Platz, E. A. Thole ń, D. Pesen, and D. B. Haviland, Appl. Phys. Lett. 92, 153106 (2008).
R. Proksch, D. Yablon, and A. Tsou, ACS Rubber Division 180th Technical Meeting, 2011-24 (2011).
S. D. Solares and G. Chawla, J. Appl. Phys., 108, 054901 (2010).
S. Guo, S. D. Solares, V. Mochalin et al., Small 8, 1264 (2012).
F. J. Giessibl, Phys. Rev. B 56(24) 16010 (1997).
D. A. Walters, J. P. Cleveland, N. H. Thomson et al. Rev. Sci. Inst., 67 3583 (1996).
K. Yamanaka, H. Ogiso, and O. Kolosov, Appl. Phys. Lett. 64, 178 (1994).
U. Rabe and W. Arnold, Appl. Phys. Lett. 64, 1493 (1994).
K. Yamanaka et al., Appl. Phys. Lett. 78, 1939 (2001).
U. Rabe et al., J. Phys. D: Appl. Phys. 35, 2621 (2002).
A. Gannepalli et al., Nanotechnology 22, 355705 (2011).
M P Nikiforov, S Hohlbauch,W P King, K Voitchovsky, S Contera, S Jesse, S V Kalinin and R Proksch, Nanotechnology, 22 (2011) 055709
J. Lee et al. Journal of Microelectromechanical Systems, 15, 1644-1655, 2006*.*
Nelson, B. A. and W. P. King, Review of Scientific Instruments, 78, 023702, 2007*.*
P Yuya, D Hurley, J Turner J Appl Phys (2008) and (2011)
J Killgore et al. Langmuir (2011)
R. Proksch, S. Kalinin, Nanotechnology 21 455705 (2010)
K. Kobayashi, H. Yamada, and K. Matsushige, Review of Scientific Instruments 82, 033702 (2011)
A. Labuda, K. Kobayashi, D. Kiracofe, K. Suzuki, P. Grutter, and H. Yamada, AIP Advances 1, 022136 (2011)
A. Labuda, K. Kobayashi, K. Suzuki, H. Yamada, and P. Grütter, Phys. Rev. Lett. 110, 066102 (2013)
A. Labuda, K. Kobayashi, Y. Miyahara, P. Grütter, Rev. Sci. Instrum. 83, 053702 (2012)
A. Labuda, P. Grütter, Langmuir 28, 5319 (2012)

### BACKGROUND OF THE INVENTION

Scanning probe devices such as the scanning Probe microscope ("SPM") or atomic force microscope ("AFM") can be used to obtain an image or other information indicative of the features of a wide range of materials with molecular and even atomic level resolution. In addition, AFMs and SPMs are capable of measuring forces accurately at the piconewton to micronewton range, in a measurement mode known as a force-distance curve or force curve. As the demand for resolution has increased, requiring the measurement of decreasingly smaller forces free of noise artifacts, the old generations of these devices are made obsolete. A demand for faster results, requiring decreasingly smaller cantilevers, only reinforces this obsolescence. The preferable approach is a new device that addresses the central issue of measuring small forces with minimal noise, while providing an array of modules optimizing the performance of the device when using small cantilevers or when doing specialized applications such as optical techniques for biology, optical techniques for photochemical, photothermal, photovoltaic and other light induced changes to the cantilever or sample, nanoindentation and electrochemistry.

For the sake of convenience, the current description focuses on systems and techniques that may be realized in particular embodiments of scanning probe devices, the SPM or the AFM. Scanning probe devices also include such instruments as 3D molecular force probe instruments, scanning tunneling microscopes ("STMs"), high-resolution profilometers (including mechanical stylus profilometers), surface modification instruments, nanoindenters, chemical/biological sensing probes, instruments for electrical measurements and micro-actuated devices. The systems and techniques described herein may be realized in such other scanning probe devices.

A SPM or AFM is a device which obtains topographical information (and other sample characteristics) while scanning (e.g., rastering) a sharp tip on the end of a probe relative to the surface of the sample. The information and characteristics are obtained by detecting small changes in the deflection or oscillation of the probe (e.g., by detecting changes in amplitude, deflection, phase, frequency, etc.) and using feedback to return the system to a reference state. By scanning the tip relative to the sample, a map of the sample topography or other characteristics may be obtained.

Changes in the deflection or oscillation of the probe are typically detected by an optical lever arrangement whereby an incident light beam is directed onto the side of the probe opposite the tip and a reflected beam from the probe illuminates a position sensitive detector ("PSD"). As the deflection or oscillation of the probe changes, the position of the reflected spot on the PSD also changes, causing a change in the output from the PSD. Changes in the deflection or oscillation of the probe are typically made to trigger a change in the vertical position of the base of the probe relative to the sample (referred to herein as a change in the Z position, where Z is generally orthogonal to the X/Y plane defined by the sample), in order to maintain the deflection or oscillation at a constant pre-set value. It is this feedback that is typically used to generate a SPM or AFM image.

SPMs or AFMs can be operated in a number of different sample characterization modes, including contact modes where the tip of the probe is in constant contact with the sample surface, and AC modes where the tip makes no contact or only intermittent contact with the surface.

Actuators are commonly used in SPMs and AFMs, for example to raster the probe or to change the position of the base of the probe relative to the sample surface. The purpose of actuators is to provide relative movement between different parts of the SPM or AFM: for example, between the tip of the probe and the sample. For different purposes and different results, it may be useful to actuate the sample or the tip or some combination of both. Sensors are also commonly used in SPMs and AFMs. They are used to detect movement, position, or other attributes of various components of the SPM or AFM, including movement created by actuators.

For the purposes of this specification, unless otherwise indicated, the term "actuator" refers to a broad array of devices that convert input signals into physical motion, including piezo activated flexures; piezo tubes; piezo stacks, blocks, bimorphs and unimorphs; linear motors; electrostrictive actuators; electrostatic motors; capacitive motors; voice coil actuators; and magnetostrictive actuators; and the term "sensor" or "position sensor" refers to a device that converts a physical quantity such as displacement, velocity or acceleration into one or more signals such as an electrical signal, including optical deflection detectors (including those referred to above as a PSD and those described in US Patent No. 6,612,160, Apparatus and Method for Isolating and Measuring Movement in Metrology Apparatus); capacitive sensors; inductive sensors (including eddy current sensors); differential transformers (such as those described in US Patent No. 7,038,443 and continuations thereof, Linear Variable Differential Transformers for High Precision Position Measurements; US Patent No. 8,269,485 and continuations thereof, Linear Variable Differential Transformer with Digital Electronics; and US Patent No. 8,502,525, and continuations thereof, Integrated Micro-Actuator and Linear Variable Differential Transformers for High Precision Position Measurements); ; variable reluctance; optical interferometry; strain gages; piezo sensors; and magnetostrictive and electrostrictive sensors.

Some current SPM/AFMs can take images up to 100 um², but are typically used in the 1 - 10 um² regime. Such images typically require from four to ten minutes to acquire. Efforts are currently being made to move toward what has been called "video rate" imaging. Typically those who use this term include producing images at the rate of one per second all the way to a true video rate at the rate of 30 per second. Video rate imaging would enable imaging moving samples, imaging ephemeral events and simply completing imaging on a timelier basis. One important means for moving toward video rate imaging is to decrease the mass of the probe, thereby achieving a higher resonant frequency while maintaining a lower spring constant.

WO-A-2009/066555, JP-A-2001304833 and "Photothermal excitation of a single-crystalline silicon cantilever for higher vibration modes in liquid", by Nishida Shuhei et al (J. Vacuum Science And Technology, PART B, MELVILLE, NY, US, vol. 27, no. 2, 1 April 2009, pages 964-968) each disclose examples of optical beam positioning units for such devices. The present invention provides an atomic force microscope system in accordance with claim 1 hereto, and a method of operating an atomic force microscope system in accordance with claim 4 hereto.

### BRIEF DESCRIPTION OF THE DRAWINGS

FIG. 1: A schematic of an optical beam positioning unit of the present invention optics used to form a focused light beam on the probe or the sample.
FIG. 2: Block diagram showing a light path of the present invention with a multiplicity of optical beam positioning units.
FIG. 3: Block diagram showing a light path of the present invention with a multiplicity of nested optical beam positioning units.
FIG. **4****:** Block diagram showing the Steering Mirror of an optical beam positioning unit and the Scheimpflug plane.
FIG. **5****:** Block diagram showing the Steering Mirror of an optical beam positioning unit and the Scheimpflug plane with the physical pivot translated along the x-axis.
FIG. **6****:** Block diagram showing the Steering Mirror of an optical beam positioning unit and the Scheimpflug plane with the phys _cal pivot translated along the z-axis.
FIG. **7****:** Block diagram showing the Steering Mirror of an optical beam positioning unit and the Scheimpflug plane with the physical pivot translated along the y-axis.
FIG. **8****:** Block diagram showing the Steering Mirror of an optical beam positioning unit and the Scheimpflug plane with the physical pivot translated along the y-axis, z-axis and x-axis.

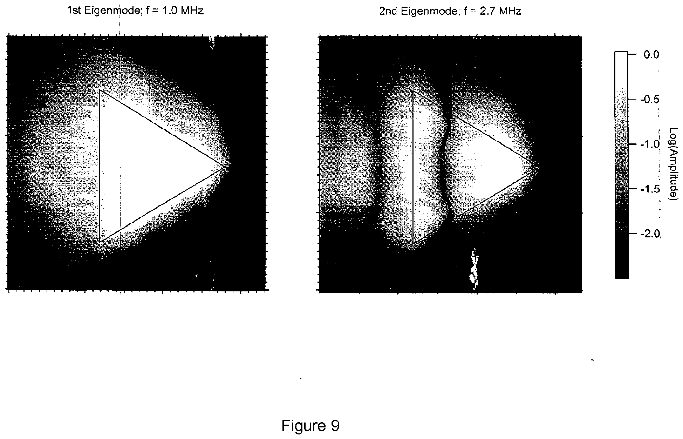

FIG. **9****:** Photographs showing cantilever response to being driven at different frequencies and locations.

### DESCRIPTION OF THE PREFERRED EMBODIMENTS

As already discussed the focused light beam in AFMs is used to measure the deflection or oscillation of the probe. It is desirable however to focus more than one light beam onto the probe to enable functionalities beyond measuring probe displacement. It is also desirable to focus more than one light beam onto the sample to enable other functionalities. The present invention resolves the design complications that stem from so focusing multiple light beams onto a single cantilever or the sample by overlapping the multiple light beams along a single optical axis of a single objective lens that is used to focus all the light beams congruently. The angular orientation or direction of travel of each light beam and the axial position of the focus of each light beam relative to the optical axis are controlled independently between light beams to allow for independent control of the three dimensional position of the focus location of each light beam relative to the cantilever or sample.

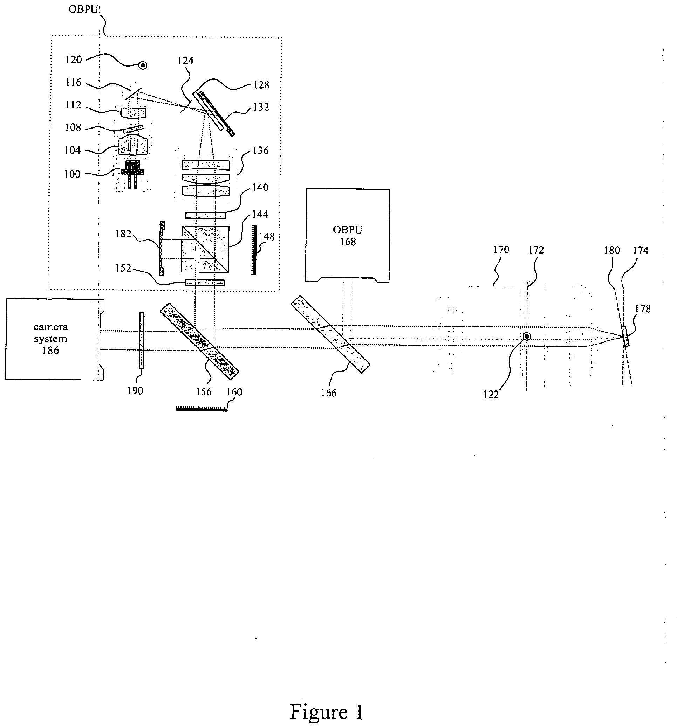

FIG. **1** shows a schematic of the optical beam positioning **(OBPU)** unit of the present invention which forms one focused light beam on the probe or the sample. Other focused light beams would employ a similar optical beam positioning unit. In FIG. **1** the light source **100** for the optics emits a divergent beam of light that is substantially collimated by a lens **104.** The light source **100** could be a laser diode or another light source such as a superluminescent diode or light-emitting diode. The only requirement is that the power density be high enough to excite the desired effect in the cantilever or the sample. The lens **104** is preferably aspheric, in order to maximize the quality of the transmitted light beam.

The collimated (or nearly collimated) light beam exiting the lens **104** may optionally traverse a linear polarizer **108.** The linear polarizer **108** can be rotated about the optical axis relative to the light source **100** (or the light source **100** may be rotated relative to the linear polarizer **108)** in order to maximize the light power throughput or to tune a desired amount of light throughput if the maximum amount of light power is deemed excessive. Also, tilting the linear polarizer **108** relative to the optical axis may be advantageous as it can reduce the amount of back-reflected light returning into the light source **100.** Back-reflected light may cause instabilities in the light emitting process.

The polarized light beam is subsequently passed through a lens **112** and refocused. This lens may be an aspheric lens, achromatic doublet, or other lens or lens group. The light beam then reflects from a steering mirror **116** that is disposed between the lens **112** and the focus of the light beam **124.** The steering mirror **116** is supported so that it can be rotated about a physical pivot **120,** defined as a point in three-dimensional space. As will be shown below, rotation of the steering mirror **116** about the physical pivot **120** provides a means for moving a focused spot in two dimensions in the plane of the probe or the plane of the sample. For the purposes of this specification these two planes are not shown separately in FIG. **1** but are collectively referred to herein as the target object **178.**

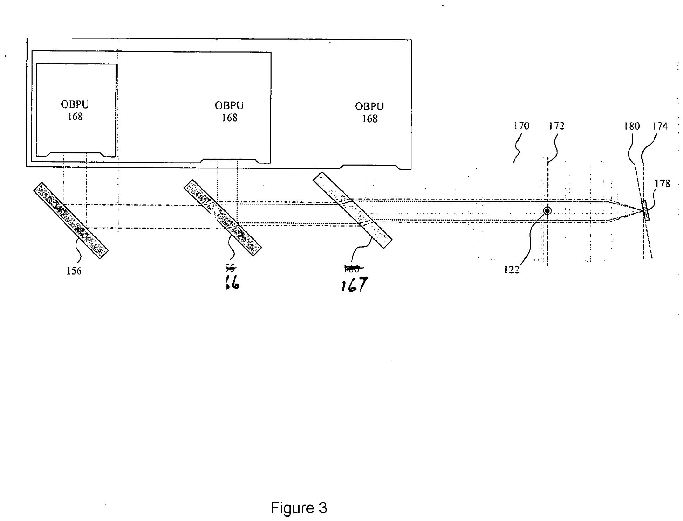

The functioning of the steering mirror **116** is illustrated in detail in FIG. **3****.** In the preferred embodiment of the present invention, the steering mirror **116** can be rotated about three orthogonal axes, two of which are parallel to the mirror **116** surface and are important for the purposes of the invention. The y-axis is one of the axes which is parallel to the mirror **116** surface. The y-axis lies within the plane **200** defined by the incident light beam **204** and the reflected light beam **208.** The z-axis is the other axis which is parallel to the mirror **116** surface. The z-axis is orthogonal to the plane of incidence **200.** Rotating the steering mirror **116** about the y-axis ("pitching" the steering mirror **116)** or about the z-axis ("yawing" the steering mirror **116),** or both, changes the direction and focus position of the reflected light beam **204.** Rotating the steering mirror **116** about the x-axis ("rolling" the steering mirror **116)** however has no effect on the direction of the reflected light beam **208.**

In the preferred embodiment, the steering mirror **116** is provided with means for actuating the pitch and yaw rotations in order to produce the desired changes in the direction and focus of the reflected light beam **204.** This means may preferably be a kinematic stage driven by transducers. The transducers and kinematic stage rotate the steering mirror **116** in two dimensions about the physical pivot **120** These transducers are preferably fine-pitch leadscrews driven by high-precision stepper motors. Alternately, the means of actuating the pitch and yaw rotations may be a rotary stage, flexure stage, or gimbal stage, and the transducers may be electromechanical motors, DC motors, piezoelectric inertial motors, piezoelectric transducers, or manual positioners. Preferably, if the transducers are stepper motors, they are provided with a gearbox to reduce the mechanical step size such that the positioning of the light beam focus is precise.

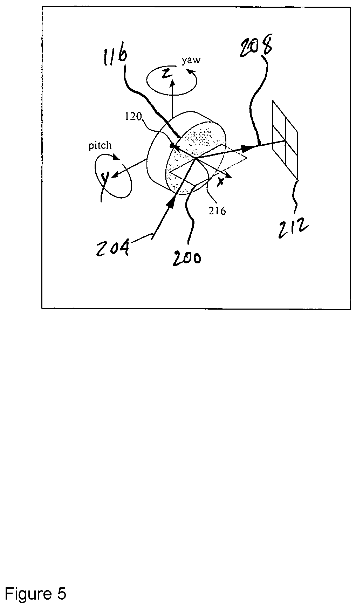

Pitching and/or yawing the steering mirror **116** affects the reflected light beam **208** in two different ways. First, pitching and/or yawing the steering mirror **116** affects the two-dimensional angular orientation or direction of travel of the reflected light beam **208.** Second, pitching and/or yawing the steering mirror **116** affects the axial position of the focus of the reflected light beam **208.** If the physical pivot **120** (about which the steering mirror **116** can be rotated) is located at the point of incidence **216** (where the incident light beam **204** intersects the reflected light beam **208),** as drawn in Figure **3****,** the effect of pitching/yawing on the axial position of the focus is minimal. Only the angular orientation of the reflected light beam **208** is affected by pitching and/or yawing under this condition. However, if the physical pivot **120** is translated relative to the point of incidence **216** as shown in FIG. **5****,** FIG. 6 and FIG. **7****,** pitching and/or yawing moves the axial position of the focus of the reflected light beam **208** at the same time that it changes the angular orientation of the reflected light beam **208.** This is crucial to the present invention. When designing the optical system, the exact location of the physical pivot **120** in three-dimensional space is tuned to set a desired relationship between the axial position of the focus and the angular orientation of the reflected light beam **208.** When this relationship is achieved, the axial position of the focus is geometrically constrained to move along a mathematically defined surface, the "Scheimpflug surface" **124.** For small angular changes around the reflected light beam **208** the Scheimpflug surface can be approximated by a "Scheimpflug plane" **212,** as drawn in Figure **3****.** The term Scheimpflug surface **124** refers to an optical principle, the Scheimpflug criterion, which is used to select the desired Scheimpflug plane **124** based on the planes of the target object **178.**

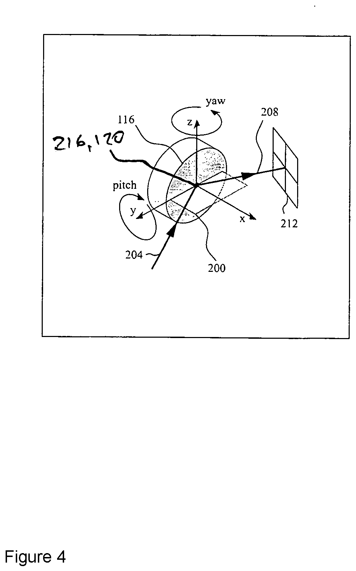

As displayed in Figure **4****,** translating the physical pivot **120** relative to the point of incidence **216** along the x-axis has no consequence on the orientation of the Scheimpflug plane. With the physical pivot **120** translated only along the x-axis, pitching and/or yawing the steering mirror **116** moves the reflected light beam **208** along the same Scheimpflug plane as it would have moved prior to translation of the physical pivot **120.** Therefore, to understand the operation of the present invention, it suffices to discuss the effect of rotating the steering mirror **116** about rotation axes that are in the plane of the mirror surface, intersecting in a physical pivot **120** that is also in the plane of the mirror surface. It may be noted however that placing the physical pivot **120** along the x-axis a short distance behind the plane of the steering mirror **116** has little effect on performance.

FIG. **5** illustrates the effect of translating the physical pivot **120** along the z-axis: the Scheimpflug plane **212** is rotated due to simultaneous changes in the axial position of focus and angular orientation of the reflected light beam **208.** Specifically, the Scheimpflug plane **212** is rotated ("tilted") along an axis that lies parallel to the plane of incidence **200.** The position of the focus moves along a tilted focal plane as the steering mirror **116** is yawed or pitched about the physical pivot **120.**

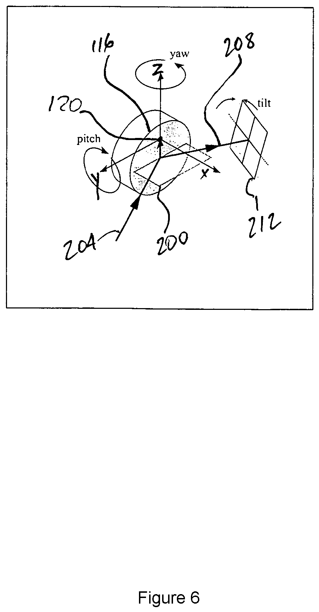

FIG. **6** illustrates the effect of translating the physical pivot **120** along the y-axis: the Scheimpflug plane **212** is rotated ("tipped") along an axis that lies perpendicular to the plane of incidence **200.** Now, the position of the focus moves along a tipped focal plane as the steering mirror **116** is yawed or pitched about the physical pivot **120.**

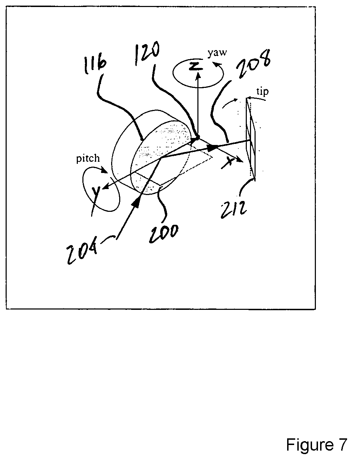

FIG. **7** illustrates that translations along the z-axis, the y-axis and the x-axis may be combined, with the Scheimpflug plane **212** both "tilted" along an axis that lies parallel to the plane of incidence **200** and "tipped" along an axis that lies perpendicular to the plane of incidence **200.**

The Scheimpflug surface **124** has an optical image near the front focal plane **174** of the objective lens **170,** which is approximated by the "conjugate Scheimpflug focal plane" **180** as shown in FIG. **1****.** The tilt angle of the conjugate Scheimpflug focal plane **180** about the optical axis of the reflected beam **208** is preferably tuned to match the tilt angle of the target object **178.** Typically, AFM cantilevers are tilted by an angle between 5 and 15 degrees. It is preferred to position the physical pivot **120** location so as to induce a tilt in the conjugate Scheimpflug focal plane **180** that substantially matches the tilt angle of the cantilever. This allows the movement of the focused beam position along the cantilever by pitching or yawing the steering mirror **116** without the need to refocus the light beam, which would otherwise be required for the tilted cantilever. In an alternative embodiment of this invention, translation of the goniometric lens group **136** may be used to compensate for the tilt angle of the cantilever. However, such an embodiment requires the use of three, instead of only two, motion transducers in order to retain a focused light spot on a tilted cantilever.

As depicted in FIG. **1**, the light beam **208** reflected from the steering mirror **116** converges to a focus at the Scheimpflug surface **124** and subsequently diverges beyond that surface. The diverging light beam is then redirected by reflection off a fold beamsplitter **128.** The fold beamsplitter **128** reflects part of the light beam, while allowing another part to traverse through the fold beamsplitter **128** to a photodetector **132** which measures the total amount of optical power in the light beam. The photodetector **132** can thus be used to tune the desired amount of light power by changing the drive current of the laser diode **100** accordingly or, as previously discussed, by rotating the linear polarizer **108** accordingly. Typically, a small fraction of the light beam will be allowed to traverse through the fold beamsplitter **128** to the photodetector **132** and substantially all the light will be reflected from the fold beamsplitter **128.** This division of the light beam is preferable as it maintains a high optical power density at the target object **178.**

The photodetector **132** discussed in the previous paragraph may be a linear position-sensitive detector, in which case the position of light beam on the photodetector **132** can be used to determine the axial position of the focus and the angular orientation of the light beam. A calibration procedure may also suffice to determine these two geometric factors. However a linear position-sensitive detector is desirable because it obviates the need for closed-loop position control on the actuators that produce pitch and yaw in the steering mirror **116.** However if closed-loop position control is in any event provided, a linear position-sensitive detector complements such control and provides a reinforcing measure of the nominal position or center position of the steering mirror **116.**

In the absence of a photodetector **132,** which is optional and not required for the functioning of the present invention, the fold beamsplitter **128** only acts as a mirror redirecting the light. With a different orientation and position of the optical components, the fold beamsplitter **128** may not be necessary.

After reflecting from the fold beamsplitter **128,** the light beam traverses one or a number of lenses that substantially collimate the beam **136.** This group of lenses is referred to herein as the goniometric lens group. The number and kind of lenses used to collimate the light beam depends on the exact optical parameters of the particular optical beam positioning unit under consideration as known to those skilled in the art. In the present invention the goniometric lens group **136** is provided with a means for translating the group along the optical axis to change the degree of collimation of the outgoing light beam. Moving the group backward or forward causes the light beam to be more divergent or convergent after traversing the group. This allows a user to adjust the axial position of the final focused spot relative to the target object **178.**

One possible means of translating the goniometric lens group **136** is by mounting the lens group in a threaded housing that is then rotated in a threaded bore. The mechanical motion of the lens group may be automated via a transducer, such as a motor, or manually adjusted by the user. The number of lenses in the group that may be required to move depends on the desired amount of collimation. The remainder of the lenses in the group, if any, may remain fixed.

The substantially collimated beam exiting the goniometric lens group **136** can be attenuated, if necessary, by the use of a filter **140** that attenuates the light by a prescribed amount. The filter **140** may be a neutral density filter, a rotationally variable neutral density filter, a colored filter, or a linear polarizing filter. In any case, the filter **140** can be adjusted manually by the user or through an automated mechanism to change the desired amount of light attenuation. Preferable automated mechanisms for this purpose include a rotationally variable neutral density filter on a motorized rotation stage and a motorized filter wheel with a plurality of filters, one of which is disposed in the beam. If filter **140** is a linear polarizing filter, either the filter or the polarizer can be rotated either manually or by some motorized mechanism. In any case it is preferable to electronically identify which, if any, filter **140** is disposed in the light beam so that the resulting beam power may be readily available.

The light beam emerging from the filter **140** then traverses a polarizing beamsplitter **144** which passes only one polarization direction of the beam. The portion of the beam that is polarized in the orthogonal direction to the desired polarization direction is reflected, rather than transmitted, and then absorbed by a beam dump **148,** such as a black felt surface. The portion of the beam that is polarized in the desired polarization direction is transmitted to a quarter-wave plate **152** which converts the linearly polarized light beam transmitted into a circularly polarized light beam.

Optical elements in the path of the light beam after it exits the quarter-wave plate **152,** such as the dichroic mirror **156,** may introduce significant phase shifts between s-polarized and p-polarized light in the circularly polarized light beam. In this situation, the desired operation of the polarizing beamsplitter **144** and quarter wave plate **152** are achieved by replacing the quarter wave plate **152** with a waveplate having sufficient retardance (greater or less than 0.25 waves) with suitable orientation so as to cancel the cumulative phase shift introduced by all subsequent optical elements in the light beam.

As noted above, the present invention may be used to measure the deflection or oscillation of the probe as is common with AFMs and may also be employed to focus more than one light beam onto the probe (or the sample) to enable functionalities other than measuring probe displacement. When the present invention is used to achieve these other functionalities, detection of the reflected beam from the sample is not required. In this case, polarizing beamsplitter **144**, waveplate **152** and beam stop **148**, may be omitted, and of course so also may the photodetector **182** used to measure the deflection or oscillation of the probe. In this connection it is necessary to remember that the presence or absence of the polarizing beamsplitter **144** and waveplate **152** have an important effect on the calculation of the correct distances in locating the virtual pivot **122** in the back focal plane **172** of objective lens **170**.

Substantially all the circularly polarized light beam transmitted from the quarter-wave plate **152** is reflected from a dichroic mirror **156.** Any portion of the beam that may traverse the dichroic mirror **156** is absorbed by a beam dump **160.** A dichroic mirror is used here rather than a conventional mirror so that wavelengths other than the wavelengths in light source **100** will traverse the mirror **156** rather than being reflected, thereby allowing the camera system **186** to image light reflected from the target object **178.**

The substantially collimated light beam exiting the dichroic mirror **156** then traverses another dichroic mirror **166,** which allows for a light beam from another optical beam positioning unit to be combined into the light path, as will be described in more detail shortly. The collimated light beam then passes through an objective lens **170** that focuses the light beam close to the front focal plane **174** of the objective lens **170.** The target object **178** targeted by the focused light beam is located close to the front focal plane **7.74** of the objective lens **170.** The objective lens **170** may be a commercially available unit, such as the Olympus LUC Plan Fluor N 20x having a numerical aperture of 0.45, or it may be an objective lens designed specifically for use in this context. Typically, an objective lens for use in this context is composed of several optical components, some of which may be translated with respect to others to adjust the position of the front focal plane relative to the position of the lens, or to adjust the spherical aberration correction of the focused spot. The lens of the invention has apochromatic or semi-apochromatic ("Fluor") correction of chromatic aberrations because it may be anticipated that multiple light beams of different wavelengths producing a plurality of spots will be present. The preferred lens will also have flat field ("Plan") correction for off-axis aberrations because the camera system **186** will preferably incorporate a digital image sensor, and because it may be anticipated that the invention will be used in conjunction with planar samples such as silicon wafers.

Some portion cf the light beam focused by the objective lens **170** close to the front focal plane **174** of the lens will be reflected by the target object **178** also located close to the front focal plane **174.** Another portion will be absorbed. It is also possible that some portion of the light beam will be transmitted through the target object **178,** depending on the material and thickness of the target object **178,** and the wavelength of the light beam.

Some portion of the light beam reflected by the target object **178** will re-enter the objective lens **170** and return to a substantially collimated state. The portion of the beam that re-enters the objective lens **170** may be maximized by laterally offsetting the incoming collimated beam in order to introduce a specific angle to the focused light beam, as described in detail in US Patent No. 8,370,960, Modular Atomic Force Microscope, referred to above. A substantial part, but not all, of the reflected light beam that re-enters the objective lens **170** reflects off the dichroic mirror **156** and is directed to the quarter-wave plate **152** which then converts the circularly polarized returning light beam into a linearly polarized light beam. Because the polarization orientation is now orthogonal to the polarization orientation of the original light beam that previously crossed the quarter-wave plate **152** in the other direction, the light beam reflects off the polarizing beamsplitter **144** instead of traversing it. In the event that the quarter-wave plate **152** has been replaced by a waveplate having retardance and orientation to compensate for phase shifts in optical elements coming after the quarter-wave plate **152,** as discussed above, the returning light beam reflects entirely off the polarizing beamsplitter **144.**

The reflected beam then impinges on a photodetector **182** which, when the present invention is being used to measure the deflection or oscillation of the probe, measures the position of the light beam. The two-dimensional position of the light beam on the photodetector **182** is used as a measure of the two-dimensional angular deviation of the target object **178** that reflected the light beam. However, when the present invention is employed to focus more than one light beam onto the probe (or the sample) to enable functionalities other than measuring probe displacement, the photodetector **182** can be used to measure the light power of the light beam.

A portion of the light beam that re-enters the objective lens **170** will traverse the dichroic mirror **156** and can be imaged using the camera system **186** if the target object **178** is illuminated by an appropriate light source, preferably a white light source. The camera system **186** can also image the focused light spot reflected from the target object **178.**

In order to assure that the brightness of the target object **178** is similar in magnitude to the brightness of the reflected light beam entering the camera system **186,** a color filter **190** can be used to selectively dim the light beam to any degree necessary. It may also be necessary to adjust the exposure time and aperture size provided by the camera system **186** to obtain proper exposure of the target object **178** and focused light spot. Even if only a small amount of the reflected light beam traverses the dichroic mirror **156** to the camera system **186** the beam will appear very bright due to its high power density. Therefore, it is anticipated that the filter **190** will be necessary to provide a good quality image in the camera system **186.**

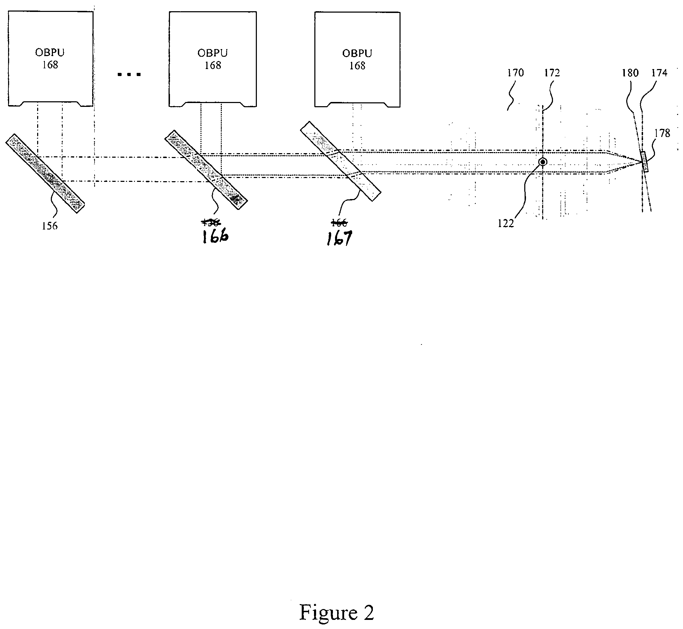

As described earlier, translating the goniometric lens group **136** along its axis changes the axial location of the final focused spot relative to the front focal plane **174** of the objective lens **170.** Prior art would have positioned the light beam focus in the axial direction by either moving the objective lens **170,** or moving the target object **178,** or both. The present invention allows the light beam to be focused without moving the objective lens **170** or the target object **178.** The same will be true for the light beam from another optical beam position unit (or units), with their own goniometric lens groups **136.** The light beams of such other units would enter the light path via other dichroic mirrors located between the dichroic mirror **156** of the first optical beam positioning unit and the objective lens **170.** FIG. 1 shows one such dichroic mirror **166.** FIG. **2** shows a light path with a multiplicity of optical beam position units and dichroic mirrors. The additional dichroic mirrors, starting with dichroic mirror **166,** may have different optical specifications than dichroic mirror **156** in order to optimally combine different light beams while minimizing loss of light power. When the goniometric lens group **136** of any one of such units is translated the axial location of the final focused spot of the relevant unit relative to the front focal plane **174** of the objective lens **170** is changed without either moving the objective lens **170,** or moving the target object **178,** or both. This is a significant difference relative to prior art because moving the objective lens **170,** or moving the target object **178,** or both, in order to position the light beam focus in the axial direction for the benefit of one optical beam positioning unit could significantly degrade the performance of other optical beam positioning units. FIG. **3** shows another variation of the FIG. **2** arrangement with multiplicity of optical beam position units feeding into a single light path. In FIG. **3** two or more optical beam position units have their translational degrees of freedom coupled so that their respective focused light spots move together in a desired direction. For example, a secondary optical beam position unit may be tethered to a primary optical beam position unit so that their focused light spots move together when the focused light spot of the primary optical beam position unit is translated in one or more directions, while the focused light spot of secondary optical beam position unit is also moved focused independently relative to the focused light spot of the primary optical beam position unit. Although FIG. 3 represents three nested optical beam position units, any number of degrees of freedom between any number of optical beam position units may be coupled as preferred by the user.

### Photothermal Excitation

In addition to being used to measure the deflection or oscillation of the probe, the light beam of an optical beam positioning unit can be used to photothermally excite mechanical vibrations of the probe. For this purpose light at the blue end of the visible spectrum is preferred. The inventors have used the beam from a laser emitting light with a wave length of 405 nm with satisfactory results.

In the prior art, a coating on some or all of the cantilever portion of the probe was required to convert heat from the light beam into mechanical strain in the probe, via different thermal expansion coefficients of the coated portion of the cantilever and the remainder of the probe. While the current invention is compatible with such coated cantilevers, it does not require a coating to photothermally induce mechanical vibrations of the probe. Due to the well-corrected optical design, the light beam focus in the present invention is significantly smaller than in the prior art. The smaller light beam focus produces larger thermal gradients that cause photothermal excitation even in probes fabricated from a single material. Because the material of the probe has nonzero thermal expansion, the thermal gradients produce strain gradients, especially when the light beam power is modulated to produce time-varying temperature gradients. For example, the light beam power can be changed sinusoidally as a function of time, producing a sinusoidal mechanical motion as required for amplitude-modulated atomic force microscopy. As described in prior art, such mechanical motion or vibration may also be enhanced by differences in thermal coefficients of expansion of two or more materials composing the probe in the case of heterogeneous probes.

Photothermal excitation of the probe may also be used in conjunction with other methods to form hybrid modes of cantilever excitation. For example, the cantilever may be driven by piezoacoustic excitation at a first resonance while simultaneously driven by photothermal excitation at a second resonance. This combination is useful if a large amplitude of oscillation, achievable with piezoacoustic excitation, is necessary for a first resonance, while the clean response of photothermal excitation is preferable for driving a second resonance. Alternative schemes for excitation may be developed to meet specific experimental goals. For example, photothermal excitation could be used to excite mechanical motion at a resonance of the cantilever while piezoacoustic excitation is used to drive the cantilever at a frequency that is not close to a cantilever resonance. Some of these schemes of excitation may involve frequency modulation or frequency tracking, in order to measure mechanical parameters of the sample, the probe or the tip of the probe. In this case, photothermal excitation is known in the prior art to provide an advantage because it provides a transfer function from excitation voltage to mechanical motion that is substantially independent of frequency and free from spurious resonances.

The location of the focused light beam on the probe used for photothermal excitation affects the drive amplitude of the probe. The relationship between location and drive amplitude is also frequency dependent because the probe has a frequency response composed of many normal and torsional eigenmodes. There are locations that provide zero excitation of the second eigenmode, while providing non-zero excitation of the first eigenmode, for example. Depending on the experiment, it may be desirable to tune the drive amplitude of the probe at different frequencies. This may be achieved by modulating the power of the photothermal excitation light beam at particular frequencies, that may correspond to different eigenmodes of the probe, while rastering the focused spot relative to the probe and measuring the driven amplitude. It may be desirable, for example, to maximize the torsional (or normal) vibration response of the probe, while minimizing the response of the normal (or torsional) deflection of the probe in certain experiments.

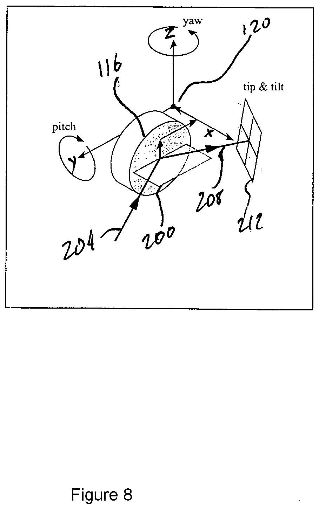

FIG. 8 shows an amplitude map of an ArrrowUHFAuD cantilever as a function of blue laser excitation near the probe. The amplitude response is also function of the modulation frequency of the blue light power. Modulating the light power at frequencies near the 1^{st} eigenmode and 2^{nd} eigenmode of the probe, as shown in both images, induces different bending modes of the cantilever which have different location-dependent responses. The width and height of each map is 66 microns. The outline of the cantilever is also drawn for reference.

### blueTherm

The light beam of an optical beam positioning unit can also be used to heat certain parts of the target object **178** to a varying degree. For this purpose light at the blue end of the visible spectrum is preferred. The inventors have used the beam from a laser emitting light with a wave length of 405 nm with satisfactory results.

Heating certain parts of the target object **178** to a varying degree causes a desirable steady-state temperature gradient to form in the probe or the sample at time scales that are longer than the mechanical time constant of the object being heated. Such a steady-state temperature gradient may occur while vibrations of the target object **178** are being induced by modulating the light beam at faster time scales. In any case, with the probe the temperature gradient can be optimized by adjusting the total optical power of the light beam and the beam position relative to the probe to control the temperature of a certain part of the probe, such as the tip of the cantilever. The variable temperature of the probe and the tip of the cantilever can be used to induce thermally activated changes in the sample according to any desired experimental protocol. One category of such experiments is known as local thermal analysis. In the prior art it is carried out using a special probe with heating elements and even a thermometer microfabricated in the probe. Such special probes are costly and are only available in a few spring constant values. With the present invention however such special probes are unnecessary as the focused light beam of the optical beam positioning unit can heat any existing probe useful for a local thermal analysis experiment.

Although the present invention can photothermally excite mechanical motion in uncoated probes, it may still be beneficial to optimize the optical and thermal properties of the probe for heating with the light beam of an optical beam positioning unit. For example, the reflectivity of the coating of the probe may be tuned appropriately, and the thermal conductivity of the probe may be patterned, through selective doping, in order to allow heat to flow to the tip of the cantilever more readily than to flow to the base of the probe (or vice versa). Furthermore, the probe may be shaped in order to facilitate conduction of heat to the tip of the cantilever; for example, the tip of the cantilever may be hollow such that the incident beam is absorbed closer to the tip. Patterning a metallic coating on the probe or the tip of the cantilever may also be used to maximize the heat flow to the tip to attain higher tip temperatures for a given light power. Coating only the end of the probe near the tip, while keeping the bulk of the probe uncoated, may also be beneficial by reducing unwanted bending of the probe caused by thermal expansion coefficient differences between the coating material and the probe material.

It is beneficial to measure the temperature of the probe for several types of experiments, such as calibrating the spring constant based on thermomechanical motion. In the present invention, the temperature of the probe may be quantified by measuring the change in the resonant frequency of the probe while changing the power of the light beam, by turning the light beam on and off for example. The temperature of the probe is related to its resonant frequency because Young's modulus of the probe is dependent on the temperature of the probe. Furthermore, the residual stress in coated probe may have a temperature dependence that can impact the relationship between the resonant frequency and the temperature. The temperature may also be inferred by measuring the deflection of the cantilever before and after turning the light beam on (or off).

Frequency-modulated AFM (FM-AFM) imaging has garnered a great deal of attention because of its high spatial resolution in air, vacuum and even fluid. Even with the prior art, FM-AFM has demonstrated success at imaging single atomic defects, imaging individual chemical bonds between surface atoms and measuring the force as a single atom was moved across a surface.

FM-AFM also permits simultaneous measurement of dissipative interactions between the tip of the cantilever and the sample. Dissipation is a combined effect of multiple interactions including long range electrostatic and magnetic interactions, as well as hysteretic interatomic forces associated with the approach and retraction of the tip of the cantilever from the surface. In the prior art the measurement of dissipation has been unreliable. Dissipation is difficult to quantify and relate to underlying physical mechanisms and results have not been reproducible. One important feature required for accurate dissipation measurements is frequency independent probe excitation. Specifically, coupling between the drive amplitude and frequency can lead to spurious dissipation measurements. Piezoacoustic excitation, especially in liquid, suffers from a "forest of peaks" in the transfer function between the excitation voltage and the mechanical motion. These peaks are caused by spurious resonances in the mechanical system, such as the resonances of a cantilever holder or liquid droplet. The peaks are not reproducible from one experiment to the next, and can even drift during one experiment. Because of these peaks, piezoacoustic excitation is very frequency-dependent, sometimes changing by a factor of ten within the probe bandwidth. Since the photothermal drive described here is substantially constant or at the least varies only slowly over typical operational frequencies, it provides more accurate dissipation measurements than the piezoacoustic excitation commonly used in the prior art and is much more reproducible.

### blueClean

After what is usually substantial use, AFM probes become contaminated by interaction with the sample. Contaminated probes must either be replaced by new probes or where feasible cleaned. In typical laboratory settings, probes are often cleaned ex *situ* using an assortment of chemical solutions, sometimes combined with UV exposure. In prior art, a dedicated apparatus was often used for cleaning probes. The cleaning of probes frequently involves a significant amount of time, and often is not successful. However replacing a contaminated probe with a new one can cost a significant amount of money. In either case, the experiment must be halted to remove and replace the existing probe from the AFM. Removing and replacing the probe also loses information regarding the sample location being imaged.

Heating the probe may be used as a method of cleaning the tip of the cantilever. For this purpose light at the blue end of the visible spectrum is preferred. The inventors have used the beam from a laser emitting light with a wave length of 405 nm with satisfactory results.

Before, during, or after imaging a sample, the light beam of an optical beam positioning unit may be turned on momentarily to heat the tip of the cantilever in order to modify the tip coating or to break down, thermally modify or remove contaminations that have adhered to the tip. This method of cleaning or modifying the tip of the cantilever has the advantage over prior art that the process can be performed *in situ,* while the probe is in close proximity to the sample. The fact that the tip of the cantilever can be cleaned or modified without removing it from the AFM is a time-saving and important improvement in that it allows the continuation of the experiment after cleaning or modification without any cumbersome repositioning of the probe.

A well-parameterized probe is very important in nanomechanical measurements, such as stiffness, storage and loss moduli, loss tangents, adhesion, indentation and a host of other parameters known to one skilled in the art. For this application a clean probe is of great importance.

### Sample Modification

The light beam of an optical beam positioning unit may be used for inducing photochemical, photovoltaic, photothermal, pyroelectric or other light sensitive changes to specific portions of the sample. For photothermal changes light at the blue end of the visible spectrum is preferred. The inventors have used the beam from a laser emitting light with a wave length of 405 nm with satisfactory results. For photochemical, photovoltaic and pyroelectric changes light with a variety of wave lengths is satisfactory.

Changes of this character may be accomplished either with the beam positioned on the probe or with the beam off the probe. The positioning of the light beam allows the user to select the locations of the sample that may undergo such changes, while the total power of the light beam can be tuned to vary the degree of changes induced in the chosen sample location. Moving the position of the focused light beam in two or three dimensions while varying the light power of the light beam enables the preparation or modification of the AFM sample before, during, or after imaging.

### blueTracking

As discussed above, in an AFM changes in the oscillation amplitude of the probe are typically made to trigger a change in the vertical position of the base of the probe relative to the sample (referred to herein as a change in the Z position, where Z is generally orthogonal to the X/Y plane defined by the sample), in order to maintain the oscillation amplitude at a constant pre-set value. It is this feedback that is typically used to generate an AFM image as the probe is rastered above the sample surface.

In some instances however mechanical resonances of the AFM hardware limit the response time of tracking the Z position of the sample topography. Attempting to track the surface of the sample with a frequency bandwidth that exceeds these mechanical resonances leads to oscillations that prevent accurate topography tracking and damage the tip of the cantilever.

This issue can be avoided by using the light beam to induce deliberate sub-resonance bending of the cantilever. Bending a cantilever upwards or downwards is analogous to moving the sample downwards or upwards. Because the mechanical resonance of a small cantilever greatly exceeds the mechanical resonance of the AFM mechanical hardware, the feedback for keeping constant oscillation amplitude for accurate topography tracking can be operated at very high frequencies - upwards of 100kHz.

For this purpose light at the blue end of the visible spectrum is preferred. The inventors have used the beam from a laser emitting light with a wave length of 405 nm on a gold coated cantilever with satisfactory results. Other wavelengths may be preferable if the cantilever is uncoated or coated with a material other than gold.

By varying the light power at time scales slower than the oscillation period of the cantilever, the cantilever bending can be approximated as linear with the light power. The light power is thus used to change the distance between the tip of the cantilever and the sample in order to track topography changes while rastering the tip over the sample surface. This device for tracking topography changes can be used in conjunction with the optical lever of an AFM, or can entirely replace the optical lever. In other words, as the sample is moved in the x and y direction for scanning, the cantilever bending resulting from the use of light power changes can be used to maintain the conditions for topography tracking. For example, in the case of amplitude modulated AFM, the on-resonance amplitude of oscillation can be held constant by the aid of a feedback loop that changes the cantilever bending through the use of light power changes. This method has the additional advantage that the same light beam can be used to oscillate the cantilever on resonance while the average light power is independently modulated to track the sample topography.

Although only a few embodiments have been disclosed in detail above, other embodiments are possible and the inventors intend these to be encompassed within this specification. The specification describes specific examples to accomplish a more general goal that may be accomplished in another way. For example, other devices, and forms of modularity, can be used. The invention is defined by the appended claims

The computers described herein may be any kind of computer, either general purpose, or some specific purpose computer such as a workstation. The computer may be a Pentium class computer, running Windows XP or Linux, or may be a Macintosh computer. The computer may also be a handheld computer, such as a PDA, cellphone, or laptop.

The programs may be written in C, or Java, Brew or any other programming language. The programs may be resident on a storage medium, e.g., magnetic or optical, e.g. the computer hard drive, a removable disk or media such as a memory stick or SD media, or other removable medium. The programs may also be run over a network, for example, with a server or other machine sending signals to the local machine, which allows the local machine to carry out the operations described herein.

## Claims

1. An atomic force microscope system with two optical beam positioning units (168) operating to characterize a sample, comprising:
an atomic force microscope probe with a cantilever and a tip at one end of the cantilever, a sample being located below the tip of the cantilever in use;
an objective lens (170) having an optical axis which allows optical viewing in an area of the cantilever, wherein said objective lens (170) directs a light beam along the optical axis to a back of the cantilever opposite the tip and obtains a return beam from the cantilever indicative of the movement of the cantilever;
wherein the objective lens (170) has apochromatic or semi-apochromatic correction of chromatic aberrations;
a first optical beam positioning unit (168), comprising:
a first steering mirror (116) that is rotatable in two orthogonal axes;
a first light source (100) with a lens (104), emitting a first beam directed at said first steering mirror (116), wherein the first beam is an infrared beam;
where said two orthogonal axes are parallel to a surface mirror (116), of the first steering a first of said two orthogonal axes lying within a plane of incidence wherein lie both the first beam and a reflection of said first beam;
a first controller, controlling the movement, relative to the optical axis of the objective lens (170), of: an angular orientation or direction of travel of the first beam; and an axial position of the focus, of the first beam reflected from the first steering mirror (116) on a back of the cantilever opposite the tip, by pitching and yawing the first steering mirror (116) so that a physical pivot where the two orthogonal axes intersect coincides with a point of incidence where the first beam is reflected from the first steering mirror (116); and
a first lens group (136) which collimates the first beam reflected from the first steering mirror (116) and directs a collimated first beam to a polarising beamsplitter (144) and a waveplate (152) and from which it is directed to a first location;
wherein the waveplate (152) is a quarter waveplate or a waveplate having sufficient retardance, greater or less than 0.25 waves, with suitable orientation so as to cancel the cumulative phase shift introduced by all subsequent optical elements in the light beam;
the waveplate (152) and polarising beamsplitter (144) being further configured to receive from the objective lens (170) the return beam from the cantilever indicative of the movement of the cantilever and direct the beam to a photodetector (182);
a second optical beam positioning unit (168), comprising:
a second steering mirror (116) that is rotatable in two orthogonal axes;
a second light source (100) with a lens (104) emitting a second beam, directed at said second steering mirror (116), wherein the second beam is in the blue end of the visible spectrum;
where said two orthogonal axes are parallel to a surface of the second steering mirror (116), a first of said two orthogonal axes lying within a plane of incidence wherein lie both the second beam and a reflection of said second beam;
a second controller, controlling the movement, relative to the optical axis of the objective lens (170), of: an angular orientation or direction of travel of the second beam; and an axial position of the focus, of the second beam reflected from the second steering mirror (116) on a back of the cantilever opposite the tip, by pitching and yawing the second steering mirror (116) so that a physical pivot where the two orthogonal axes intersect coincides with a point of incidence where the second beam is reflected from the second steering mirror (116); and
a second lens group (136) which collimates the second beam reflected from the second steering mirror (116) and directs a collimated second beam to a second location;
a first dichroic mirror (156) at said first location;
a second dichroic mirror (166) at said second location;
the first dichroic mirror (156) receiving a beam from the first optical beam positioning unit (168) and directing the beam toward the objective lens (170), and the second dichroic mirror (166) receiving a beam from the second optical beam positioning unit (168) and directing the beam toward the objective lens (170), and the second dichroic mirro: (166) also receiving the beam from the first dichroic mirror (156) and directing the beam from the first dichroic mirror (156) toward the objective lens (170) along with the beam from the second optical beam positioning unit (168), the beam from the objective lens (170) directed to the cantilever;
and wherein the first and second lens groups (136) which collimate the first and second beams respectively are each provided with a means for translating the respective lens group (136) along the optical axis of the respective lens group (136) to change the degree of collimation of the respective light beam.

2. The system as in claim 1 wherein the second beam has a wavelength of 405 nm.

3. The system as in claim 1, where the first dichroic mirror (156)is traversed by wavelengths other than the wavelength of the first beam, and where the second dichroic mirror (166)is traversed by wavelengths other than the wavelength of the second beam

4. An method of operating an atomic force microscope system, comprising:
using a cantilever having a tip at one end of the cantilever, to characterize a sample, wherein the sample is located below the tip of the cantilever;
optically viewing in an area of the cantilever, using an objective lens (170) having an apochromatic or semi-apochromatic correction of chromatic aberrations, and having an optical axis wherein said objective lens (170) directs a light beam along the optical axis to the back of the cantilever opposite the tip and obtains a return beam from the cantilever indicative of the movement of the cantilever;
using a first optical beam positioning unit (168) to direct a first optical beam to the cantilever,
using a first steering mirror (116) that is rotatable in two orthogonal axes to steer said first optical beam;
emitting a first beam directed at said first steering mirror (116),
wherein the first beam is an infrared beam;
where said two orthogonal axes are parallel to a surface of the first steering mirror (116), a first of said two orthogonal axes lying within a plane of incidence wherein lie both the first beam and a reflection of said first beam;
controlling the movement, relative to the optical axis of the objective lens (170), of: an angular orientation or direction of travel of the first beam; and an axial position of the focus, of the first beam reflected from the first steering mirror (116) on a back of the cantilever opposite the tip, by pitching and yawing the first steering mirror (116) so that a physical pivot where the two orthogonal axes intersect coincides with a point of incidence where the first beam is reflected from the first steering mirror (116);
using a first lens group (136) which collimates the first beam reflected from the first steering mirror (116) and directs a collimated first beam to a polarising beamsplitter (144) and a waveplate (152) and from which it is directed to a first location;
wherein the waveplate (152) is a quarter waveplate or a waveplate having sufficient retardance, greater or less than 0.25 waves, with suitable orientation so as to cancel the cumulative phase shift introduced by all subsequent optical elements in the light beam;
the waveplate (152) and polarising beamsplitter (144) being further configured to receive from the objective lens (170) the return beam from the cantilever indicative of the movement of the cantilever and direct the beam to a photodetector (182);
using a second optical beam positioning unit (168) to direct a second optical beam to the cantilever,
using a second steering mirror (116) that is rotatable in two orthogonal axes to steer said second optical beam;
emitting a second beam directed at said second steering mirrpr (116), wherein the second beam is a beam in the blue end of the visible spectrum;
where said two orthogonal axes are parallel to a surface of the second steering mirror (116), a second of said two orthogonal axes lying within a plane of incidence wherein lie both the second beam and a reflection of said second beam;
controlling the movement, relative to the optical axis of the objective lens (170), of: an angular orientation or direction of travel of the second beam; and an axial position of the focus, of the second beam reflected from the second steering mirror (116) on back of the cantilever opposite the tip, a by pitching and yawing the second steering mirror (116) so that a physical pivot where the two orthogonal axes intersect coincides with a point of incidence where the second beam is reflected from the second steering mirror (116);
using a second lens group (136) which collimates the second beam reflected from the second steering mirror (116) and directs a collimated second beam to a second location;
using a first dichroic mirror (156) at said first location;
using a second dichroic mirror (166) at said second location;
the first dichroic mirror (156) receiving a beam from the first optical beam positioning unit (168) and directing the beam toward the objective lens (170), and the second dichroic mirror (166) receiving a beam from the second optical beam positioning unit (168) and directing the beam toward the objective lens (170), and the second dichroic mirror (166) also receiving the beam from the first dichroic mirror (156) and directing the beam from the first dichroic mirror (156) toward the objective lens (170) along with the beam from the second optical beam positioning unit (168), the beam from the objective lens (170) directed to the cantilever; and receiving a return beam from the cantilever indicative of the movement of the cantilever and using the return beam to characterize the sample
and wherein the first and second lens groups (136) which collimate the first and second beams respectively are each provided with a means for translating the respective lens group (136) along the optical axis of the respective lens group (136) to change the degree of collimation of the respective light beam.

5. The method as in claim 4, wherein the second beam has a wavelength of 405 nm.

6. The method as in claim 4, where the first dichroic mirror (156) is traversed by wavelengths other than the wavelength of the first beam, and where the second dichroic mirror (166) is traversed by wavelengths other than the wavelength of the second beam.

## Patentansprüche

1. Rasterkraftmikroskopsystem mit zwei optischen Strahlpositionierungseinheiten (168), die zum Charakterisieren einer Probe arbeiten, das Folgendes umfasst:
eine Rasterkraftmikroskopsonde mit einem Cantilever und einer Spitze an einem Ende des Cantilevers, wobei sich eine Probe unter der Spitze des Cantilevers in Verwendung befindet;
ein Objektiv (170), das eine optische Achse aufweist, die ein optisches Betrachten in einem Bereich des Cantilevers ermöglicht, wobei das Objektiv (170) einen Lichtstrahl entlang der optischen Achse auf eine Rückseite des Cantilevers gegenüber der Spitze richtet und einen Rückstrahl von dem Cantilever erhält, der die Bewegung des Cantilever anzeigt;
wobei das Objektiv (170) eine apochromatische oder halbapochromatische Korrektur chromatischer Aberrationen aufweist;
eine erste optische Strahlpositionierungseinheit (168), die Folgendes umfasst:
einen ersten Lenkspiegel (116), der in zwei orthogonalen Achsen drehbar ist;
eine erste Lichtquelle (100) mit einer Linse (104), die einen ersten Strahl emittiert, der auf den ersten Lenkspiegel (116) gerichtet ist, wobei der erste Strahl ein Infrarotstrahl ist;
wobei die zwei orthogonalen Achsen parallel zu einer Oberfläche des ersten Lenkspiegels (116) sind, wobei eine erste der zwei orthogonalen Achsen innerhalb einer Einfallsebene liegt, in der sowohl der erste Strahl als auch eine Reflexion des ersten Strahls liegen;
eine erste Steuervorrichtung, die die Bewegung, relativ zu der optischen Achse des Objektivs (170), von Folgendem steuert: einer Winkelausrichtung oder einer Bewegungsrichtung des ersten Strahls; und einer axialen Position des Fokus des ersten Strahls, der von dem ersten Lenkspiegel (116) auf einer Rückseite des Cantilevers gegenüber der Spitze durch ein Nicken und ein Gieren des ersten Lenkspiegels (116) reflektiert wird, sodass ein physischer Drehpunkt, an dem sich die zwei orthogonalen Achsen schneiden, mit einem Einfallspunkt zusammenfällt, an dem der erste Strahl von dem ersten Lenkspiegel (116) reflektiert wird; und
eine erste Linsengruppe (136), die den ersten Strahl kollimiert, der von dem ersten Lenkspiegel (116) reflektiert wird, und einen kollimierten ersten Strahl zu einem polarisierenden Strahlteiler (144) und einer Wellenplatte (152) richtet und von denen er zu einer ersten Stelle gerichtet wird;
wobei die Wellenplatte (152) eine Viertelwellenplatte oder eine Wellenplatte ist, die eine ausreichende Verzögerung aufweist, größer oder kleiner als 0,25 Wellen, mit geeigneter Ausrichtung, um die kumulative Phasenverschiebung aufzuheben, die durch alle nachfolgenden optischen Elemente in den Lichtstrahl eingeführt wird;
wobei die Wellenplatte (152) und der polarisierende Strahlteiler (144) ferner konfiguriert sind, um von dem Objektiv (170) den Rückstrahl von dem Cantilever zu empfangen, der die Bewegung des Cantilevers anzeigt, und den Strahl zu einem Fotodetektor (182) zu richten;
eine zweite optische Strahlpositionierungseinheit (168), die Folgendes umfasst:
einen zweiten Lenkspiegel (116), der in zwei orthogonalen Achsen drehbar ist;
eine zweite Lichtquelle (100) mit einer Linse (104), die einen zweiten Strahl emittiert, der auf den zweiten Lenkspiegel (116) gerichtet ist,
wobei der zweite Strahl in dem blauen Ende des sichtbaren Spektrums ist;
wobei die zwei orthogonalen Achsen parallel zu einer Oberfläche des zweiten Lenkspiegels (116) sind,
wobei eine erste der zwei orthogonalen Achsen innerhalb einer Einfallsebene liegt, in der sowohl der zweite Strahl als auch eine Reflexion des zweiten Strahls liegen;
eine zweite Steuervorrichtung, die die Bewegung, relativ zu der optischen Achse des Objektivs (170), von Folgendem steuert; einer Winkelausrichtung oder einer Bewegungsrichtung des zweiten Strahls; und einer axialen Position des Fokus des zweiten Strahls, der von dem zweiten Lenkspiegel (116) auf einer Rückseite des Cantilevers gegenüber der Spitze durch das Nicken und das Gieren des zweiten Lenkspiegels (116) reflektiert wird, sodass ein physischer Drehpunkt, an dem sich die zwei orthogonalen Achsen schneiden, mit einem Einfallspunkt zusammenfällt, an dem der zweite Strahl von dem zweiten Lenkspiegel (116) reflektiert wird; und
eine zweite Linsengruppe (136), die den zweiten Strahl kollimiert, der von dem zweiten Lenkspiegel (116) reflektiert wird, und einen kollimierten zweiten Strahl zu einer zweiten Stelle richtet;
einen ersten dichroitischen Spiegel (156) an der ersten Stelle;
einen zweiten dichroitischen Spiegel (166) an der zweiten Stelle;
wobei der erste dichroitische Spiegel (156) einen Strahl von der ersten optischen Strahlpositionierungseinheit (168) empfängt und den Strahl auf das Objektiv (170) richtet, und der zweite dichroitische Spiegel (166) einen Strahl von der zweiten optischen Strahlpositionierungseinheit (168) empfängt und den Strahl auf das Objektiv (170) richtet, und wobei der zweite dichroitische Spiegel (166) ebenso den Strahl von dem ersten dichroitischen Spiegel (156) empfängt und
Richten des Strahls von dem ersten dichroitischen Spiegel (156) in Richtung des Objektivs (170) zusammen mit dem Strahl von der zweiten optischen Strahlpositionierungseinheit (168),
wobei der Strahl von dem Objektiv (170) auf den Cantilever gerichtet ist;
und wobei die erste und die zweite Linsengruppe (136), die den ersten beziehungsweise den zweiten Strahl kollimieren, jeweils mit einem Mittel zum Verschieben der jeweiligen Linsengruppe (136) entlang der optischen Achse der jeweiligen Linsengruppe (136) versehen sind, um den Kollimationsgrad des jeweiligen Lichtstrahls zu ändern.

2. System nach Anspruch 1, wobei der zweite Strahl eine Wellenlänge von 405 nm aufweist.

3. System nach Anspruch 1, in dem der erste dichroitische Spiegel (156) durch andere Wellenlängen als der Wellenlänge des ersten Strahls durchquert wird,
und in dem der zweite dichroitische Spiegel (166) durch andere Wellenlängen als der Wellenlänge des zweiten Strahls durchquert wird.

4. Verfahren zum Betreiben eines Rasterkraftmikroskopsystems, das Folgendes umfasst:
Verwenden eines Cantilevers, der eine Spitze an einem Ende des Cantilevers aufweist, um eine Probe zu charakterisieren, wobei sich die Probe unter der Spitze des Cantilevers befindet;
optisches Betrachten in einem Bereich des Cantilevers, unter Verwendung eines Objektivs (170), das eine apochromatische oder halbapochromatische Korrektur chromatischer Aberrationen aufweist und eine optische Achse aufweist, wobei das Objektiv (170) einen Lichtstrahl entlang der optischen Achse auf die Rückseite des Cantilevers gegenüber der Spitze richtet und einen Rückstrahl von dem Cantilever erhält, der die Bewegung des Cantilevers anzeigt;
Verwenden einer ersten optischen Strahlpositionierungseinheit (168), um einen ersten optischen Strahl auf den Cantilever zu richten,
Verwenden eines ersten Lenkspiegels (116), der in zwei orthogonalen Achsen drehbar ist, um den ersten optischen Strahl zu lenken;
Emittieren eines ersten Strahls, der auf den ersten Lenkspiegel (116) gerichtet ist,
wobei der erste Strahl ein Infrarotstrahl ist;
wobei die zwei orthogonalen Achsen parallel zu einer Oberfläche des ersten Lenkspiegels (116) sind,
wobei eine erste der zwei orthogonalen Achsen innerhalb einer Einfallsebene liegt, in der sowohl der erste Strahl als auch eine Reflexion des ersten Strahls liegen;
Steuern der Bewegung, relativ zu der optischen Achse des Objektivs (170), von Folgendem: einer Winkelausrichtung oder einer Bewegungsrichtung des ersten Strahls; und einer axialen Position des Fokus des ersten Strahls, der von dem ersten Lenkspiegel (116) auf einer Rückseite des Cantilevers gegenüber der Spitze durch das Nicken und das Gieren des ersten Lenkspiegels (116) reflektiert wird, sodass ein physischer Drehpunkt, an dem sich die zwei orthogonalen Achsen schneiden, mit einem Einfallspunkt zusammenfällt, an dem der erste Strahl von dem ersten Lenkspiegel (116) reflektiert wird;
Verwenden einer ersten Linsengruppe (136), die den ersten Strahl kollimiert, der von dem ersten Lenkspiegel (116) reflektiert wird, und einen kollimierten ersten Strahl zu einem polarisierenden Strahlteiler (144) und einer Wellenplatte (152) richtet und von denen er zu einer ersten Stelle gerichtet wird;
wobei die Wellenplatte (152) eine Viertelwellenplatte oder eine Wellenplatte ist, die die ausreichende Verzögerung aufweist, größer oder kleiner als 0,25 Wellen, mit geeigneter Ausrichtung, um die kumulative Phasenverschiebung aufzuheben, die durch alle nachfolgenden optischen Elemente in den Lichtstrahl eingeführt wird;
wobei die Wellenplatte (152) und der polarisierende Strahlteiler (144) ferner konfiguriert sind, um von dem Objektiv (170) den Rückstrahl von dem Cantilever zu empfangen, der die Bewegung des Cantilevers anzeigt, und den Strahl zu einem Fotodetektor (182) zu richten;
Verwenden einer zweiten optischen Strahlpositionierungseinheit (168), um einen zweiten optischen Strahl auf den Cantilever zu richten,
Verwenden eines zweiten Lenkspiegels (116), der in zwei orthogonalen Achsen drehbar ist, um den zweiten optischen Strahl zu lenken;
Emittieren eines zweiten Strahls, der auf den zweiten Lenkspiegel (116) gerichtet ist, wobei der zweite Strahl ein Strahl in dem blauen Ende des sichtbaren Spektrums ist;
wobei die zwei orthogonalen Achsen parallel zu einer Oberfläche des zweiten Lenkspiegels (116) sind,
wobei eine zweite der zwei orthogonalen Achsen innerhalb einer Einfallsebene liegt, in der sowohl der zweite Strahl als auch eine Reflexion des zweiten Strahls liegen;
Steuern der Bewegung, relativ zu der optischen Achse des Objektivs (170), von Folgendem: einer Winkelausrichtung oder einer Bewegungsrichtung des zweiten Strahls; und einer axialen Position des Fokus des zweiten Strahls, der von dem zweiten Lenkspiegel (116) auf einer Rückseite des Cantilevers gegenüber der Spitze durch das Nicken und das Gieren des zweiten Lenkspiegels (116) reflektiert wird, sodass ein physischer Drehpunkt, an dem sich die zwei orthogonalen Achsen schneiden, mit einem Einfallspunkt zusammenfällt,
wobei der zweite Strahl von dem zweiten Lenkspiegel (116) reflektiert wird;
Verwenden einer zweiten Linsengruppe (136), die den zweiten Strahl kollimiert, der von dem zweiten Lenkspiegel (116) reflektiert wird, und einen kollimierten zweiten Strahl zu einer zweiten Stelle richtet;
Verwenden eines ersten dichroitischen Spiegels (156) an der ersten Stelle;
Verwenden eines zweiten dichroitischen Spiegels (166) an der zweiten Stelle;
wobei der erste dichroitische Spiegel (156) einen Strahl von der ersten optischen Strahlpositionierungseinheit (168) empfängt und den Strahl auf das Objektiv (170) richtet,
und der zweite dichroitische Spiegel (166) einen Strahl von der zweiten optischen Strahlpositionierungseinheit (168) empfängt und den Strahl auf das Objektiv (170) richtet,
und der zweite dichroitische Spiegel (166) ebenso den Strahl von dem ersten dichroitischen Spiegel (156) empfängt und
Richten des Strahls von dem ersten dichroitischen Spiegel (156) auf das Objektiv (170) zusammen mit dem Strahl aus der zweiten optischen Strahlpositionierungseinheit (168),
wobei der Strahl von dem Objektiv (170) auf den Cantilever gerichtet ist; und Empfangen eines Rückstrahls von dem Cantilever, der die Bewegung des Cantilevers anzeigt, und Verwenden des Rückstrahls, um die Probe zu charakterisieren
und wobei die erste und die zweite Linsengruppe (136), die den ersten beziehungsweise den zweiten Strahl kollimieren, jeweils mit einem Mittel zum Verschieben der jeweiligen Linsengruppe (136) entlang der optischen Achse der jeweiligen Linsengruppe (136) versehen sind, um den Kollimationsgrad des jeweiligen Lichtstrahls zu ändern.

5. Verfahren nach Anspruch 4, wobei der zweite Strahl eine Wellenlänge von 405 nm aufweist.

6. Verfahren nach Anspruch 4, in dem der erste dichroitische Spiegel (156) durch andere Wellenlängen als die Wellenlänge des ersten Strahls durchquert wird,
und in dem der zweite dichroitische Spiegel (166) durch andere Wellenlängen als der Wellenlänge des zweiten Strahls durchquert wird.

## Revendications

1. Système de microscope à force atomique doté de deux unités de positionnement de faisceau optique (168) fonctionnant pour caractériser un échantillon, comprenant :
une sonde de microscope à force atomique dotée d'un cantilever et d'une pointe à une extrémité du cantilever, un échantillon étant situé sous la pointe du cantilever en cours d'utilisation ;
une lentille d'objectif (170) ayant un axe optique qui permet une visualisation optique dans une zone du cantilever, dans lequel ladite lentille d'objectif (170) dirige un faisceau lumineux le long de l'axe optique vers un arrière du cantilever opposé à la pointe et obtient un faisceau de retour du cantilever indiquant le mouvement du cantilever ;
dans lequel la lentille d'objectif (170) présente une correction apochromatique ou semi-apochromatique des aberrations chromatiques ;
une première unité de positionnement de faisceau optique (168), comprenant :
un premier miroir d'orientation (116) qui peut tourner dans deux axes orthogonaux ;
une première source de lumière (100) dotée d'une lentille (104) émettant un premier faisceau dirigé vers ledit premier miroir d'orientation (116), dans lequel le premier faisceau est un faisceau infrarouge ;
où lesdits deux axes orthogonaux sont parallèles à une surface du premier miroir d'orientation (116), un premier desdits deux axes orthogonaux se trouvant à l'intérieur d'un plan d'incidence dans lequel se trouvent à la fois le premier faisceau et une réflexion dudit premier faisceau ;
un premier dispositif de commande, commandant le mouvement, par rapport à l'axe optique de la lentille d'objectif (170) : d'une orientation angulaire ou d'une direction de déplacement du premier faisceau ; et d'une position axiale du foyer du premier faisceau réfléchi par le premier miroir d'orientation (116) sur un arrière du cantilever à l'opposé de la pointe, en inclinant et en laçant le premier miroir d'orientation (116) de telle sorte qu'un pivot physique où les deux axes orthogonaux se croisent coïncide avec un point d'incidence où le premier faisceau est réfléchi par le premier miroir d'orientation (116) ; et
un premier groupe de lentilles (136) qui collimate le premier faisceau réfléchi par le premier miroir d'orientation (116) et dirige un premier faisceau collimaté vers un séparateur de faisceau polarisant (144) et une lame-onde (152) et à partir desquels il est dirigé vers un premier emplacement ;
dans lequel la lame-onde (152) est une lame quart d'onde ou une lame-onde ayant un retard suffisant, supérieur ou inférieur à 0,25 onde, avec une orientation appropriée de manière à annuler le déphasage cumulé introduit par tous les éléments optiques subséquents dans le faisceau lumineux ;
la lame-onde (152) et le séparateur de faisceau polarisant (144) étant en outre configurés pour recevoir de la lentille d'objectif (170) le faisceau de retour du cantilever indiquant le mouvement du cantilever et diriger le faisceau vers un photodétecteur (182) ;
une seconde unité de positionnement de faisceau optique (168), comprenant :
un second miroir d'orientation (116) qui peut tourner dans deux axes orthogonaux ;
une seconde source de lumière (100) dotée d'une lentille (104) émettant un second faisceau, dirigé vers ledit second miroir d'orientation (116),
dans lequel le second faisceau est à l'extrémité bleue du spectre visible ;
où lesdits deux axes orthogonaux sont parallèles à une surface du second miroir d'orientation (116), un premier desdits deux axes orthogonaux se trouvant à l'intérieur d'un plan d'incidence dans lequel se trouvent à la fois le second faisceau et une réflexion dudit second faisceau ;
un second dispositif de commande, commandant le mouvement, par rapport à l'axe optique de la lentille d'objectif (170) : d'une orientation angulaire ou d'une direction de déplacement du second faisceau ; et d'une position axiale du foyer du second faisceau réfléchi par le second miroir d'orientation (116) sur un arrière du cantilever à l'opposé de la pointe, en inclinant et en laçant le second miroir d'orientation (116) de telle sorte qu'un pivot physique où les deux axes orthogonaux se croisent coïncide avec un point d'incidence où le second faisceau est réfléchi par le second miroir d'orientation (116) ; et
un second groupe de lentilles (136) qui collimate le second faisceau réfléchi par le second miroir d'orientation (116) et dirige un second faisceau collimaté vers un second emplacement ;
un premier miroir dichroïque (156) au niveau dudit premier emplacement ;
un second miroir dichroïque (166) au niveau dudit second emplacement ;
le premier miroir dichroïque (156) recevant un faisceau de la première unité de positionnement de faisceau optique (168) et dirigeant le faisceau vers la lentille d'objectif (170), et le second miroir dichroïque (166) recevant un faisceau de la seconde unité de positionnement de faisceau optique (168) et dirigeant le faisceau vers la lentille d'objectif (170), et le second miroir dichroïque (166) recevant également le faisceau du premier miroir dichroïque (156) et dirigeant le faisceau du premier miroir dichroïque (156) vers la lentille d'objectif (170) avec le faisceau de la seconde unité de positionnement de faisceau optique (168), le faisceau provenant de la lentille d'objectif (170) étant dirigé vers le cantilever ;
et dans lequel les premier et second groupes de lentilles (136) qui collimatent respectivement les premier et second faisceaux sont chacun pourvus d'un moyen pour translater le groupe de lentilles (136) respectif le long de l'axe optique du groupe de lentilles (136) respectif pour changer le degré de collimation du faisceau lumineux respectif.

2. Système selon la revendication 1, dans lequel le second faisceau a une longueur d'onde de 405 nm.

3. Système selon la revendication 1, dans lequel le premier miroir dichroïque (156) est traversé par des longueurs d'onde autres que la longueur d'onde du premier faisceau, et où le second miroir dichroïque (166) est traversé par des longueurs d'onde autres que la longueur d'onde du second faisceau.

4. Procédé de fonctionnement d'un système de microscope à force atomique, comprenant :
l'utilisation d'un cantilever ayant une pointe à une extrémité du cantilever, pour caractériser un échantillon, dans lequel l'échantillon est situé sous la pointe du cantilever ;
la visualisation optique dans une zone du cantilever, à l'aide d'une lentille d'objectif (170) ayant une correction apochromatique ou semi-apochromatique des aberrations chromatiques, et ayant un axe optique, dans lequel ladite lentille d'objectif (170) dirige un faisceau lumineux le long de l'axe optique vers l'arrière du cantilever opposé à la pointe et obtient un faisceau de retour du cantilever indiquant le mouvement du cantilever ;
l'utilisation d'une première unité de positionnement de faisceau optique (168) pour diriger un premier faisceau optique vers le cantilever,
l'utilisation d'un premier miroir d'orientation (116) qui peut tourner dans deux axes orthogonaux pour orienter ledit premier faisceau optique ;
l'émission d'un premier faisceau dirigé vers ledit premier miroir d'orientation (116), dans lequel le premier faisceau est un faisceau infrarouge ;
où lesdits deux axes orthogonaux sont parallèles à une surface du premier miroir d'orientation (116), un premier desdits deux axes orthogonaux se trouvant à l'intérieur d'un plan d'incidence dans lequel se trouvent à la fois le premier faisceau et une réflexion dudit premier faisceau ;
la commande du mouvement, par rapport à l'axe optique de la lentille d'objectif (170) : d'une orientation angulaire ou d'une direction de déplacement du premier faisceau ; et d'une position axiale du foyer, du premier faisceau réfléchi par le premier miroir d'orientation (116) sur un arrière du cantilever à l'opposé de la pointe, en inclinant et en laçant le premier miroir d'orientation (116) de telle sorte qu'un pivot physique où les deux axes orthogonaux se croisent coïncide avec un point d'incidence où le premier faisceau est réfléchi par le premier miroir d'orientation (116) ;
l'utilisation d'un premier groupe de lentilles (136) qui collimate le premier faisceau réfléchi par le premier miroir d'orientation (116) et dirige un premier faisceau collimaté vers un séparateur de faisceau polarisant (144) et une lame-onde (152) et à partir desquels il est dirigé vers un premier emplacement ;
dans lequel la lame d'onde (152) est une lame quart d'onde ou une lame-onde ayant un retard suffisant, supérieur ou inférieur à 0,25 onde, avec une orientation appropriée de manière à annuler le déphasage cumulé introduit par tous les éléments optiques subséquents dans le faisceau lumineux ;
la lame-onde (152) et le séparateur de faisceau polarisant (144) étant en outre configurés pour recevoir de la lentille d'objectif (170) le faisceau de retour du cantilever indiquant le mouvement du cantilever et diriger le faisceau vers un photodétecteur (182) ;
l'utilisation d'une seconde unité de positionnement de faisceau optique (168) pour diriger un second faisceau optique vers le cantilever,
l'utilisation d'un second miroir d'orientation (116) qui peut tourner dans deux axes orthogonaux pour orienter ledit second faisceau optique ;
l'émission d'un second faisceau dirigé vers ledit second miroir d'orientation (116), dans lequel le second faisceau est un faisceau à l'extrémité bleue du spectre visible ;
où lesdits deux axes orthogonaux sont parallèles à une surface du second miroir d'orientation (116), un second desdits deux axes orthogonaux se trouvant à l'intérieur d'un plan d'incidence dans lequel se trouvent à la fois le second faisceau et une réflexion dudit second faisceau ;
la commande du mouvement, par rapport à l'axe optique de la lentille d'objectif (170) : d'une orientation angulaire ou d'une direction de déplacement du second faisceau ; et d'une position axiale du foyer du second faisceau réfléchi par le second miroir d'orientation (116) sur un arrière du cantilever à l'opposé de la pointe, en inclinant et en laçant le second miroir d'orientation (116) de telle sorte qu'un pivot physique où les deux axes orthogonaux se croisent coïncide avec un point d'incidence où le second faisceau est réfléchi par le second miroir d'orientation (116) ;
l'utilisation d'un second groupe de lentilles (136) qui collimate le second faisceau réfléchi par le second miroir d'orientation (116) et dirige un second faisceau collimaté vers un second emplacement ;
l'utilisation d'un premier miroir dichroïque (156) au niveau dudit premier emplacement ;
l'utilisation d'un second miroir dichroïque (166) au niveau dudit second emplacement ;
le premier miroir dichroïque (156) recevant un faisceau de la première unité de positionnement de faisceau optique (168) et dirigeant le faisceau vers la lentille d'objectif (170),
et le second miroir dichroïque (166) recevant un faisceau de la seconde unité de positionnement de faisceau optique (168) et dirigeant le faisceau vers la lentille d'objectif (170),
et le second miroir dichroïque (166) recevant également le faisceau du premier miroir dichroïque (156) et dirigeant le faisceau du premier miroir dichroïque (156) vers la lentille d'objectif (170) avec le faisceau de la seconde unité de positionnement de faisceau optique (168), le faisceau provenant de la lentille d'objectif (170) étant dirigé vers le cantilever ; et la réception d'un faisceau de retour du cantilever indiquant le mouvement du cantilever et l'utilisation du faisceau de retour pour caractériser l'échantillon
et dans lequel les premier et second groupes de lentilles (136) qui collimatent respectivement les premier et second faisceaux sont chacun pourvus d'un moyen pour translater le groupe de lentilles (136) respectif le long de l'axe optique du groupe de lentilles (136) respectif pour changer le degré de collimation du faisceau lumineux respectif.

5. Procédé selon la revendication 4, dans lequel le second faisceau a une longueur d'onde de 405 nm.

6. Procédé selon la revendication 4,
où le premier miroir dichroïque (156) est traversé par des longueurs d'onde autres que la longueur d'onde du premier faisceau,
et où le second miroir dichroïque (166) est traversé par des longueurs d'onde autres que la longueur d'onde du second faisceau.
